Europäisches Patentamt

European Patent Office

Office européen des brevets

(11) Publication number: **0 115 699**
**B1**

(12) EUROPEAN PATENT SPECIFICATION

(45) Date of publication of patent specification: **05.04.89**

(21) Application number: **83307958.5**

(22) Date of filing: **23.12.83**

(51) Int. Cl.⁴: **G 11 B 5/09**

(54) Methods and apparatus for recording and reproducing analog signals.

(30) Priority: **27.12.82 JP 230599/82**

(43) Date of publication of application:
**15.08.84 Bulletin 84/33**

(45) Publication of the grant of the patent:
**05.04.89 Bulletin 89/14**

(84) Designated Contracting States:
**AT CH DE FR GB IT LI NL**

(56) References cited:
**GB-A-1 127 229**
**GB-A-2 062 313**
**GB-A-2 082 825**

(73) Proprietor: **SONY CORPORATION**
**7-35 Kitashinagawa 6-Chome Shinagawa-ku**
**Tokyo 141 (JP)**

(72) Inventor: **Odaka, Kentaro c/o Patent Division**
**Sony Corporation**
**7-35 Kitashinagawa-6 Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to methods and apparatus for recording and/or reproducing analog signals, and more particularly, but not exclusively, to methods and apparatus for recording and/or reproducing an analog signal as a pulse code modulated (PCM) signal incorporating error-correcting and parity information in which the time-base is compressed prior to recording and is expanded upon reproduction.

Recording and reproducing an analog signal, such as an audio signal, as a PCM signal permits high-quality recording and reproduction. Both fixed-head and rotating-head systems have been used for recording and/or reproducing PCM signals, and the rotary head system of a video tape recorder (VTR) has been proposed for recording an audio PCM signal. Typically, in a VTR having two rotary heads, the heads are located diametrically opposite on a rotating drum, that is, the heads are spaced 180° apart, and the magnetic tape is wrapped about the periphery of a tape guide drum over an angular extent substantially the same as the head separation. Each head then traces or scans a track on the tape for each revolution of the drum. When the information signal is recorded by the rotary head on the tape in the form of an analog signal, in order to prevent signal drop-outs. It is necessary that the rotary head recording the signal always be in contact with the tape. Otherwise, the signal would not be continuously recorded. On the other hand, in the case of recording a PCM information signal, because the PCM signal is a digital signal, the time-base thereof can be compressed and/or expanded by the use of one or more digital memory units.

Of course, if the PCM signal is recorded by the rotary head with no drop-outs in a fashion similar to an analog signal, there is no time available in which to add redundant data, such as parity words or error check words, to the PCM signal. Accordingly, we have previously disclosed (European patent specification EP—A2—0 092 403 published 26 October 1983) apparatus that employs a system of buffer memories, random access memories, and appropriate switching networks to delay and compress the signals to be recorded. This processing of the PCM signal to be recorded, while effective, is complex and cumbersome, as well as costly since it involves so many additional circuit elements. Nevertheless, time-base compression is necessary in order to provide the additional time within which to perform error detection and correction.

Along with all of these problems there is the further requirement that the rotary head and tape guide drum sub-assembly be as small as possible, in order to promote the portability of the unit. A principal limiting factor on the minimum dimensions of a video tape recorder is the diameter of the tape-guide drum.

According to the present invention there is provided apparatus for recording an analog signal on a magnetic medium using two rotary heads, with different azimuth angles and which periodically trace the magnetic medium, the apparatus comprising:

converting means for converting said analog signal to a digital signal;

means for rotating said rotary heads;

guide means for guiding the magnetic medium past said rotary heads over an angular range of not more than 180°; and

compressing means for time-base compressing said digital signal to produce a time-base compressed recording signal;

characterized by:

means for selectively supplying said time-base compressed recording signal to said rotary heads, so that during each revolution one only of said rotary heads is writing, said rotary heads being switched so as to write successive adjacent tracks on the magnetic medium, and said time-base compressed recording signal being supplied to said rotary heads at periods corresponding to the writing periods of said rotary heads.

According to the present invention there is also provided a method of recording an analog signal on a magnetic medium using two rotary heads, with different azimuth angles and which periodically trace the magnetic medium, the method comprising the steps of:

converting said analog signal to a digital signal;

rotating said rotary heads;

guiding the magnetic medium past said rotary heads over an angular range of not more than 180°; and

time-base compressing said digital signal to produce a time-base compressed recording signal;

characterized by:

selectively supplying said time-base compressed recording signal to said rotary heads, so that during each revolution one only of said rotary heads is writing, said rotary heads being switched so as to write successive adjacent tracks on the magnetic medium, and said time-base compressed recording signal being supplied to said rotary heads at periods corresponding to the writing periods of said rotary heads.

According to the present invention there is also provided apparatus for reproducing an analog signal which has been recorded as a corresponding digital signal in time-base compressed form in a composite digital signal including parity and error correction data in corresponding tracks on a record medium by a recording apparatus according to the preceding paragraph but one, the reproducing apparatus comprising:

two rotary reproducing heads for periodically scanning said magnetic medium and reproducing said composite digital signals;

means for rotating said rotary heads such that during each revolution one only of the two rotary heads is reading, said rotary heads being switched so as to read successive adjacent tracks on the magnetic medium;

reproducing guide means for guiding said record medium past said rotary heads over an angular range of not more than 180°;

error correction means for correcting errors contained in said reproduced composite digital signal reproduced by said rotary heads;

memory means for time-base expanding said corrected digital signal; and

converting means for converting the time-base expanded digital signal into a corresponding analog signal.

The invention will now be described by way of example with reference to the accompanying drawings, throughout which like parts are referred to by like references, and in which:

Figure 1 is a schematic representation of a rotary head assembly used in a method and apparatus for recording and/or reproducing an analog signal and according to the present invention;

Figure 2 is an illustration of the orientation of tracks recorded on a magnetic tape using the rotary head assembly shown in Figure 1;

Figure 3 is a block diagram illustrating a preferred embodiment of an apparatus for recording an analog signal and according to the present invention;

Figure 4 is a block diagram illustrating a preferred embodiment of apparatus for reproducing an analog signal, as might be recorded by the apparatus of Figure 3 and according to the present invention;

Figures 5A to 5N are timing charts and waveforms representing recording and/or reproducing operations;

Figure 6 is a schematic illustration of another example of a rotary head assembly used in a method and apparatus for recording and/or reproducing an analog signal and according to the present invention;

Figure 7 is a timing chart representing the timing of a recording system; and

Figure 8 is a schematic illustration of another example of a rotary head assembly used in a method and apparatus for recording and/or reproducing an analog signal and according to the present invention.

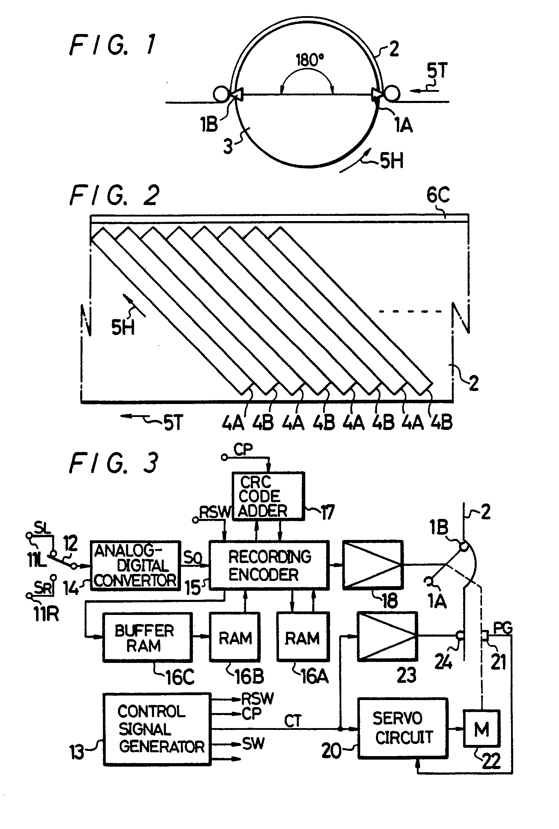

Figure 1 schematically illustrates a rotary head assembly, as used in an embodiment of the present invention, that includes two magnetic heads 1A and 1B mounted on a rotating drum (not shown). In this assembly, the two rotary heads 1A and 1B are separated by an angular distance of $360°/2=180°$, that is, they are dimetrically opposed, and the magnetic tape 2 on which the signals are to be recorded and/or reproduced is wrapped around the peripheral surface of a tape guide drum 3 over an angular extent of 180°.

We have previously disclosed a recording apparatus in which the magnetic tape is wound around the peripheral surface of a tape guide drum over an angular extent of 90° and the speed at which the rotary head rotates in 30 revolutions per second. This rotary head speed can be taken as a reference rotation speed for recording a video signal, and in this embodiment of the present invention the heads 1A and 1B are rotated at a speed that is twice this reference rotational speed, that is, the heads 1A and 1B are rotated at 60 revolutions per second.

In this embodiment, when the tape 2 is transported at a predetermined speed in a direction shown generally by an arrow 5T the heads 1A and 1B will trace therein a plurality of magnetic tracks 4A and 4B, respectively, as represented in Figure 2. These slanted magnetic tracks 4A and 4B are recorded one by one on the tape 2 by the heads 1A and 1B thereby recording the signal in a fashion that will be described below. In this embodiment, high-density data recording is possible by using different azimuth gap angles in the heads 1A and 1B, thereby eliminating the requirement for the so-called guard bands between adjacent tracks. This technique of using different azimuth gap angles relies upon the well-known azimuth loss effect to prevent cross-talk between adjacent tracks. Furthermore, the heads 1A and 1B are displaced relative to each other in the rotary axial direction, so that the scanning locus by the head 1A is traced by the head 1B in exactly the same way. Note that in the embodiment of Figure 1, there is no free period when the two heads 1A and 1B are both out of contact with the tape 2.

Figure 3 shows an example of the recording system in which an analog audio signal is recorded as a two channel signal, comprising left and right audio channels. A left-channel analog audio signal $S_L$ is supplied through an input terminal 11L to one input terminal of a switching circuit 12, and a right-channel analog audio signal $S_R$ is applied through an input terminal 11R to the other input terminal of the switching circuit 12. The switching circuit 12 is changed over alternately in position in response to a switching signal SW, which is a square-wave signal having a duty factor of 50%. The switching signal SW is derived from a control signal generator circuit 13 at a frequency of 44.1 kHz and controls the switching circuit 12 so that the switching circuit 12 changes over at each period during which the signal SW is at a high level or at a low level. Accordingly, the switching circuit 12 alternately supplies the left channel signal $S_L$ and the right channel signal $S_R$ to an analog-to-digital (A/D) converter 14. In the A/D converter 14 this signal is sampled at a sampling frequency of 44.1 kHz per channel, and then this sampled signal is converted to a pulse code modulation (PCM) signal that is this embodiment may comprise sixteen bits per sample, for example.

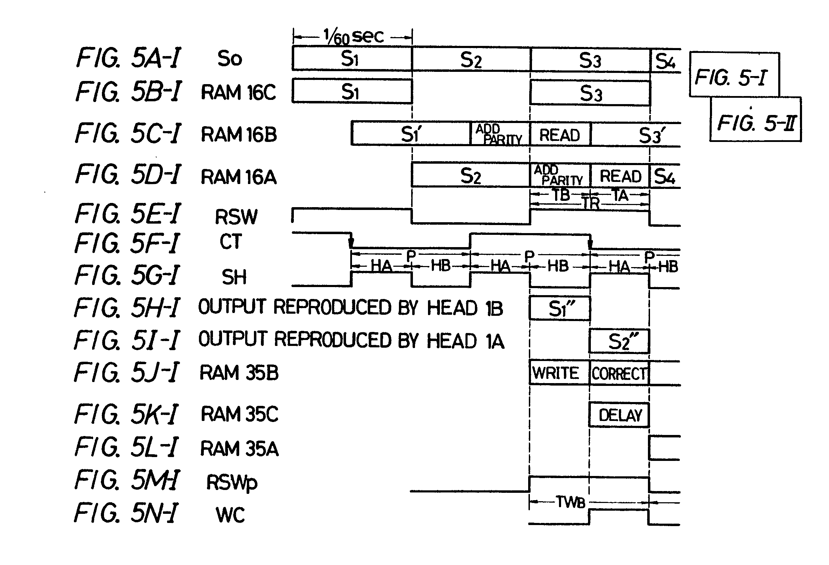

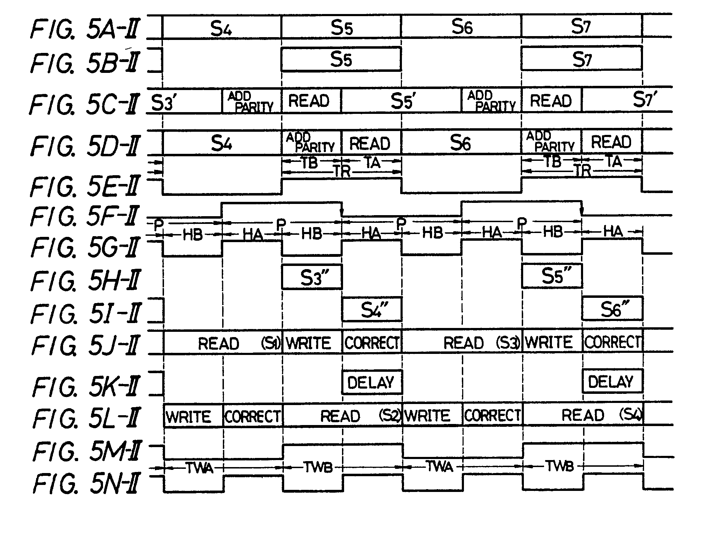

The output signal $S_0$ from the A/D converter 14 is fed to a recording encoder 15, and the output signal $S_0$ is shown in the timing charts at Figure 5A. The recording encoder 15 is connected to suitable memory circuits, specifically, a random access memory (RAM) 16A is directly connected to an output of the recording encoder 15 and a buffer RAM 16C is connected between an output of the recording encoder 15 and a second random access memory 16B. The buffer RAM 16C operates to delay the data input to the RAM 16B to provide the desired time delay. Also connected to an input/output interface of the recording encoder 15 is a parity word and cyclic redundancy check (CRC) code generating and adding circuit 17. A control signal RSW, the timing waveform of which is shown in Figure 5E, is produced by the control signal generator 13 and fed to the recording encoder 15, which operates in response thereto to switch the PCM data signal $S_0$ every 1/60 of a second, which corresponds to the duration of time required for one revolution of the heads 1A and 1B. Note again that the heads 1A and 1B are rotated at a speed that is twice the reference rotation speed of 1/30 of a second. The data signal $S_0$, which is switched in the recording encoder 15 in response to the control signal RSW, is then written into the RAMs 16A and 16B as PCM signals $S_1$, $S_2$, $S_3$,..., that have periods of 1/60 of a second and the appropriate parity words and error correcting codes are added thereto, as will be described below.

The PCM signals $S_1$, $S_2$, $S_3$,..., which have periods of 1/60 of a second, are separated in the recording encoder 15 so that alternate ones of the signals $S_2$, $S_4$, $S_6$,..., are written directly into the RAM 16A; the timing of this being shown at Figure 5D. Similarly, the remaining ones of the PCM signals, that is $S_1$, $S_3$, $S_5$..., are fed into the buffer RAM 16C where they are delayed in time by an amount corresponding to one-half a revolution period of the rotary heads 1A and 1B, that is 1/120 of a second, and thereby become signals $S_1'$, $S_3'$, $S_5'$,..., and are then written into the RAM 16B. The timing of the signals into the buffer RAM 16C and the RAM 16B are shown in Figures 5B and 5C, respectively.

As shown in Figures 5C and 5D, the PCM data having a period of 1/60 of a second is written into the RAMs 16B and 16A, respectively, and during the 1/120 of a second that corresponds to a one-half revolution of the heads 1A and 1B following the write periods of the RAMs 16A and 16B, respectively, the parity word and CRC code generating and adding circuit 17 is operated to generate the error correcting parity word and CRC code, which are then added to the data in the recording encoder 15. The control signal generating circuit 13 generates the appropriate control signal CP that actuates the CRC adding circuit 17. Once the PCM signals have had the parity and CRC code added thereto they are written back into the RAMs 16A and 16B, respectively, and during the period of 1/120 of a second following the parity word and CRC code generating and adding period, the PCM data in each period of 1/60 of a second are read out from the RAMs 16A and 16B, respectively, at a speed substantially twice that at which they were written in. In other words, the PCM data has been compressed in time-base by one-half and is then made equal to the tape contact period of either the head 1A or the head 1B.

As is made clear in Figure 5, the period during which the PCM data having the compressed time-base is read out from the RAMs 16A and 16B is the period TR during which the signal RSW has a high level, the waveform of the signal RSW is shown in Figure 5E. Since the signal RSW is inverted in state every 1/60 of a second, which corresponds to one revolution of the heads 1A and 1B, the reading out of the data is accomplished at each period representing one revolution. During the first half period TB of the period TR, or 1/120 of a second corresponding to one-half revolution of the heads 1A and 1B, the PCM data having the compressed time-base is read out from the RAM 16B, whereas during the second half-period TA of the period TR, or 1/120 of a second, the PCM data having the compressed time-base is read out from the RAM 16A. As described above, the data of each unit period having the compressed time-base read from the RAMs 16A and 16B and obtained from the recording encoder 15 is then supplied through a recording amplifier 18 to a respective one of the two heads 1A and 1B. the control signal generating circuit 13 produces a reference signal CT, the waveform of which is shown in Figure 5F, having a frequency of 30 Hz that is fed to a servo circuit 20 so that the heads 1A and 1B are in synchronism with the signals to be recorded. During the period TA the head 1A scans the tape 2, while during the period TB the head 1B scans the tape 2, thus the reference signal CT that has a phase different than that of the control signal RSW by π/2 is fed to the servo circuit 20. The feedback to the servo circuit 20 is provided by a pulse generator 21 that generates a pulse signal PG of frequency 30 Hz so that a pulse is present each time the heads 1A and 1B rotate. The output from the servo circuit 20 is fed to a head drum drive motor 22 which applies the phase servo to the heads 1A and 1B so that the head 1A commences contact with the tape 2 at a time corresponding to the occurrence of the trailing edge of the square wave reference signal CT.

If the period of time from which the head 1A first commences contact with the tape 2 to the time when the head 1A again commences contact with the tape 2 is taken as a unit rotational interval P, a first-half rotation period HA in the unit rotational interval P is the period during which the head 1A scans the tape 2, whereas the second-half rotation period HB in the unit rotational interval P is the period in which the head 1B scans the tape 2. Thus, as shown in Figure 5, the read period TB from the RAM 16B corresponds to every other contact period HB of the head 1B with the tape 2, while the read period TA from the RAM 16A corresponds to every other contact period HA of the head 1A with the tape 2. Moreover, the second half period HB in the unit rotational interval P and the first half-period HA in the succeeding unit rotational interval P are coincident with these very same read periods TB and TA, respectively.

Therefore, there is recorded on the tape 2 PCM time-base compressed data having a period of 1/60 of a second by the head 1B in a certain unit rotational interval P thereby forming the track 4B, whereas there is also recorded on the tape 2 PCM time-base compressed data having a period of 1/60 of a second by the head 1A during the first half-period HA in the succeeding unit rotational interval P thereby forming the track 4A. Although during the second half-period HB in the unit rotational interval P the head 1B scans the track 4A no recorded signal exists during this period and, thus, the signal recorded by the head 1A remains in the track 4A. Similarly, although in the first half-period HA and the succeeding unit rotational interval P the head 1A scans the tape 2 such that a track adjoining the track 4A will be formed, during this period HA no signal exists and accordingly no record track is formed. Thereafter, when the second half-period HB occurs, PCM data is read out from the RAM 16B and supplied to the head 1B so that the track 4B is formed by the head 1B on which the time-base compressed PCM data is recorded. The above operations are repeated successively and the tracks 4B and 4A alternately successively formed, as represented in Figure 2, in order to record the PCM data.

The control signal CT produced by the control signal generator 13 is also fed through a recording amplifier 23 to a stationary magnetic head 24, and the time control signal is thereby recorded along an edge of the tape 2 as a control pulse track 6C utilized in the playback mode. The control pulse track 6C is seen in relation to the tape 2 in Figure 2.

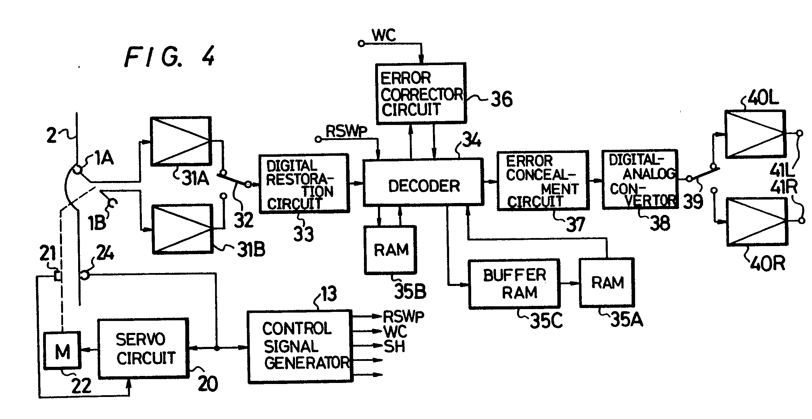

Following a recording operation such as described above the audio PCM signal can be reproduced in the following fashion utilizing apparatus as shown in Figure 4. In the reproducing system shown in Figure 4, a pulse signal having a frequency of 30 Hz is reproduced from the control pulse track 6C on the tape 2 by the stationary head 24, and this pulse signal is fed to the servo circuit 20 and also to the control signal generator circuit 13. the pulse signal PG produced by the pulse generator 21 is also fed to the servo circuit 20, so that the heads 1A and 1B are servo controlled to scan the tracks 4A and 4B, respectively, with the identical relationship as that employed during recording. Thus, the reproduced signals obtained by the heads 1B and 1A are as represented in Figures 5H and 5I.

The output signals produced by the heads 1A and 1B are fed through amplifiers 31A and 31B, respectively, to inputs of a switching circuit 32. The switching circuit 32 alternately selects one or the other of the input terminals in response to a switching control signal SH that has a frequency of 30 Hz, the waveform of which is shown in Figure 5G, and which is produced by the control signal generator circuit 13. Thus, the switching circuit 32 alternately produces a reproduced output from the heads 1A and 1B, respectively, during one rotational period at every other rotation. The output signal from the switching circuit 32 is fed to a digital restoring circuit 33 that operates to restore the signal to a digital signal by cleaning and shaping the reproduced waveform, and the restored digital signal is fed to a decoder 34 which it is decoded to the original PCM data signal $S_0$. In the decoder 34 the signal processing is carried out by means of RAMs 35A and 35B, which are changed over in response to a control signal RSWP, the waveform of which is shown in Figure 5M, that is produced by the control signal generator circuit 13. As seen in Figure 5M, the control signal RSWP changes over between a high-level period TWB and a low-level period TWA, and in the first half of the period TWB the output data reproduced by the head 1B is written into the RAM 35B, while in the second half of the period TWB the output data reproduced by the head 1A is delayed by a time of 1/120 of a second by means of the buffer RAM 35C and then subsequently written into the RAM 35A during the first half of the period TWA. The PCM data written into the RAMs 35B and 35A are corrected in an error correcting circuit 36 during the second half portions of the 1/120 of a second periods of the periods TWB and TWA, respectively. That is, since a control signal WC supplied to the error corrector circuit 36 from the control signal generator circuit 13 goes high during the second half of the periods TWB and TWA, the error correcting circuit 36 is operated for error correction during those times. The waveform of control signal WC is shown in Figure 5N-I. Accordingly, error correction is performed within the error correction ability range by use of the parity word and the CRC code.

The reproduced data of one track amount that were written in the RAMs 35B and 35A that has been subsequently error corrected are alternately read out at a speed that is approximately one half that used in writing during the periods TWA and TWB, as shown in Figures 5J and 5L, respectively. That is, the PCM signal which now has its time-base expanded to equal the original time-base is successively produced. The PCM signal from the decoder unit 34 is fed to an error concealing or error correcting circuit 37, which acts to conceal any errors which could not be corrected by the error correcting circuit 36. This technique is well-known and various value holding systems are known to accomplish error concealment. The output signal from the error correcting circuit 37 is fed to a digital-to-analog (D/A) converter 38, wherein it is returned to an analog signal and fed to a switching circuit 39. The switching circuit 39 is alternately changed over in response to a switching signal SW, which is identical to the switching signal SW utilized during the recording operation, and the audio signals of the left channel and right channel are thus demodulated and respectively supplied through amplifiers 40L and 40R to output terminals 41L and 41R, respectively.

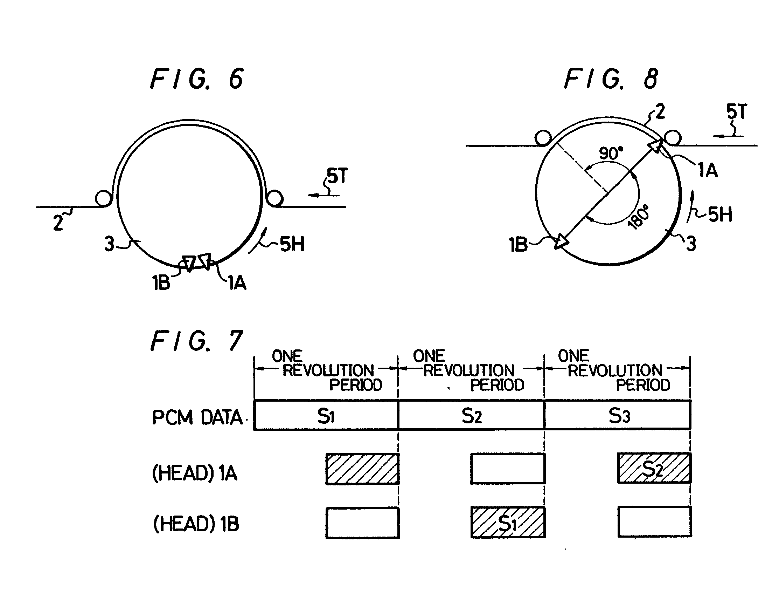

Although in the above-described embodiment two rotary heads 1A and 1B are located with an angular separation of 180° therebetween and are displaced in the rotational axial direction so that the scanning locus by the head 1A is scanned in exactly the same way by the head 1B, is also possible to utilize the embodiment represented in Figure 6, wherein the two rotary heads 1A and 1B are not displaced in the rotational axial direction but are disposed at position having substantially the same rotational angle. Thus, the heads 1A and 1B are rotated at a speed which is twice as high as a reference speed, thereby recording the PCM signal at a time-base compressed signal, with the time-base compressed by a factor of a one-half. The timing of the rotary head system of Figure 6 is shown in Figure 7, wherein the two heads 1A and 1B operate to contact simultaneously the tape 2 during only one-half of the revolution period corresponding to the wrap angle of the tape 2 around the periphery of the guide drum 3 and, accordingly, both scan the same scanning locus. More specifically, the heads 1A and 1B contact the tape 2 at each half revolution of the rotary head assembly, thus, when the heads 1A and 1B are rotated at a speed that is twice as high as a reference speed, the PCM data is respectively recorded by only the head 1A during a certain one-revolution period and only by the head 1B during the successive one-revolution period, as represented by the hatched portions in Figure 7. The PCM signal corresponding to the one-revolution period of the heads 1A and 1B, that is, one-half revolution period amount of the reference speed, namely, the angular spacing amount of 180° that represents the tape wrap angle, can be recorded as each track that has added thereto the error correction parity word and the like and this is compressed in time-base to one-half.

In a still further embodiment, as represented in Figure 8, the rotary heads 1A and 1B are mounted with an angular distance of 180° therebetween, however, the wrap angle of the tape about the periphery of the guide drum 3 is much smaller than the head separation angular distance of 180°. In Figure 8, the tape wrap angle is one half of the head separation angular distance and is 90°, accordingly, the time-base of the recorded signal can be compressed further by an additional half, that is, compressed to one-quarter of the original time base.

Based upon the above it can be seen that the time-base compression ratio of the PCM signal is determined by the number n of rotary heads the multiplied speed ratio N of the rotary heads relative to a reference speed, and the tape wrap angle $\alpha°$ of the tape 2 about the guide drum 3, where $\alpha°$ is less than or equal to 360°. Accordingly, the time-base compression ratio D can be determined by the following expression:

$$D=(n\times\alpha°)/(N\times360°) \qquad (1)$$

Where $N\times360°$ is greater than $n\times\alpha°$. In utilizing this equation in the embodiment of Figure 6, the angular distance between heads 1A and 1B is taken to be 360°.

Moreover, the rotational speed that is multiplied by the ratio N of the rotary head is not limited to twice the reference speed but can be selected to be any integral multiple thereof, equal to or greater than two, such as three or four times.

Accordingly, as described above, since the rotational speed of the rotary head is selected to be N times a reference speed where N is at least two, and the tape wrap angle $\alpha°$, where $\alpha°$ is less than or equal to 360°, is determined relative to the number of heads and the head mounting angular distance, the PCM data can be compressed in time-base with a predetermined compression ratio and ultimately recorded on the tape. Moreover, since a period in which no PCM signal is recorded by any one of the rotary heads is provided by the above time-base compression that period can be effectively utilized to accomplish the desired error correction. Furthermore, time-base compression can be carried out utilizing only a minimal number of memory units.

Since the PCM signal is compressed in time-base and then recorded, the bit rate of the recorded PCM signal can be increased. In the case of the rotary head assembly, supplying and deriving the signal to and from the rotary head is achieved through a rotary transformer and, thus, the increase of the transmission band allows supplying and deriving the signal to and from the rotary head in an easier fashion. Another advantageous effect is provided in that the transmission band can be made higher than the band of the time-base error in which wow and flutter would typically occur and, thus the adverse effects of wow and flutter are suppressed.

Furthermore, since the rotational speed of the rotary head is selected to be higher than the reference speed, it is possible to raise the relative speed of the head in relation to the transport of the tape and, thus, recording head output bandwidth can be improved. Also, when the PCM signal is recorded and/or reproduced from the magnetic tape with predetermined compression ratio, the number n of rotary heads, the rotational speed N of the rotary head, and the tape wrap angle $\alpha°$ can be selected. This means that when the tape wrap angle $\alpha°$ can be increased, the diameter of the guide drum 3 can be made smaller and, hence, the capability to reduce the overall size of the recording apparatus is provided.

Additionally, as set forth above, since there occurs a period during which no signal is recorded on the tape by either of the two heads the tape can be transported only during such period and recording by the rotary head can be carried out during the period when the tape is stopped. Therefore, even although the tape speed is changed depending on the use, the record track is formed in the mode wherein the tape is stopped so that record tracks are formed with the same angle of inclination with respect to the longitudinal axis of the tape. This means that variable speed playback effects such as fast forward and slow motion, for example, can be facilitated with relative ease.

**Claims**

1. Apparatus for recording an analog signal on a magnetic medium (2) using two rotary heads (1A, 1B), with different azimuth angles and which periodically trace the magnetic medium (2), the apparatus comprising:

converting means (14) for converting said analog signal to a digital signal;

means (22) for rotating said rotary heads (1A, 1B);

guide means (3) for guiding the magnetic medium (2) past said rotary heads (1A, 1B) over an angular range of not more than 180°; and compressing means (15, 16) for time-base compressing said digital signal to produce a time-base compressed recording signal;

characterized by:

means (13) for selectively supplying said time-base compressed recording signal to said rotary heads (1A, 1B), so that during each revolution one only of said rotary heads (1A, 1B) is writing, said rotary heads (1A, 1B) being switched so as to write successive adjacent tracks on the magnetic medium (2), and said time-base compressed recording signal being supplied to said rotary heads (1A, 1B) at periods corresponding to the writing periods of said rotary heads (1A, 1B).

2. Apparatus according to claim 1 wherein said rotary heads (1A, 1B) are equally spaced magnetic heads (1A, 1B), said magnetic medium (2) is a magnetic tape (2), and said guide means (3) includes means (3) for guiding said tape (2) past said two magnetic heads (1A, 1B) over an angular range of 180°.

3. Apparatus according to claim 2 including means (3) for mounting said two magnetic heads (1A, 1B) to be mutually displaced in the rotational axial direction such that a scanning locus of one magnetic head (1A) is coincident with a scanning locus of the other magnetic head (1B) during guiding of said tape (2) past said magnetic heads (1A, 1B).

4. Apparatus according to claim 3 wherein said means (13) for selectively supplying said time-base compressed signal to said rotary heads (1A, 1B) includes means (13) for supplying said signal to said two equally spaced magnetic heads (1A, 1B) during periods when said magnetic heads (1A, 1B) contact said tape (2) once every two revolutions of said magnetic heads (1A, 1B).

5. Apparatus according to claim 1 wherein said rotary heads (1A, 1B) comprise two magnetic heads (1A, 1B) arranged substantially at the same position, said magnetic medium (2) comprises a magnetic tape (2), and said guide means (3) includes means (3) for guiding said tape (2) past said two magnetic heads (1A, 1B) over an angular range of 90°.

6. Apparatus according to claim 1 wherein said converting means (14) includes means (14) for providing a pulse code modulated (PCM) signal representing said analog signal; and further comprising digital data generating means (17) for supplying parity data and a cyclic redundancy check code to be combined with said PCM signal to form a composite signal.

7. Apparatus according to claim 6 wherein said compressing means (15, 16) includes a memory means (16) for storing and time-base compressing said digital signal, and said digital data generating means (17) adds said parity data and said cyclic redundancy check code to said PCM data and writes the resultant composite signal into said memory means (16).

8. A method of recording an analog signal on a magnetic medium (2) using two rotary heads (1A, 1B), with different azimuth angles and which periodically trace the magnetic medium (2), the method comprising the steps of:

converting said analog signal to a digital signal;

rotating said rotary heads (1A, 1B);

guiding the magnetic medium (2) past said rotary heads (1A, 1B) over an angular range of not more than 180°; and

time-base compressing said digital signal to produce a time-base compressed recording signal;

characterized by:

selectively supplying said time-base compressed recording signal to said rotary heads (1A, 1B), so that during each revolution one only of said rotary heads (1A, 1B) is writing, said rotary heads (1A, 1B) being switched so as to write successive adjacent tracks on the magnetic medium (2), and said time-base compressed recording signal being supplied to said rotary heads (1A, 1B) at periods corresponding to the writing periods of said rotary heads (1A, 1B).

9. A method according to claim 8 further comprising the steps of arranging said rotary heads (1A, 1B) as two equally spaced magnetic heads (1A, 1B), providing said magnetic medium (2) as a magnetic tape (2), and guiding said magnetic tape (2) past said two magnetic heads (1A, 1B) over an angular range of 180°.

10. A method according to claim 9 including the further steps of mounting said two magnetic heads (1A, 1B) to be mutually displaced in the rotational axial direction such that a scanning locus of one magnetic head (1A) is coincident with a scanning locus of the other magnetic head (1B) during guiding of said magnetic tape (2) past said magnetic heads (1A, 1B).

11. A method according to claim 10 wherein said step of selectively supplying said time-base compressed recording signal to said magnetic heads (1A, 1B) includes the step of supplying said recording signal to said magnetic heads (1A, 1B) during periods when said magnetic heads (1A, 1B) contact said magnetic tape (2) once every two revolutions of said magnetic heads (1A, 1B).

12. A method according to claim 9 including the steps of arranging said two magnetic heads (1A, 1B) to be substantially at the same position, providing said magnetic medium (2) as a magnetic tape (2), and guiding said magnetic tape (2) past said two magnetic heads (1A, 1B) over an angular range of 180°.

13. A method according to claim 8 wherein the step of converting said analog signal to a digital signal includes the steps of providing a PCM signal representing said analog signal and generating parity data and a cyclic redundancy check (CRC) code, and combining said parity data and said CRC code with said PCM signal to form a composite signal therefrom.

14. A method according to claim 13 wherein the step of time-base compressing said digital signal includes the steps of providing a memory (16) for storing and compressing said digital signal, adding said parity data and said cyclic redundancy check code to said PCM data, and writing the resultant composite signal into said memory (16).

15. Apparatus for reproducing an analog signal which has been recorded as a corresponding digital signal in time-base compressed form in a composite digital signal including parity and error correction data in corresponding tracks on a record medium (2) by a recording apparatus according to claim 1, the reproducing apparatus comprising:

two rotary reproducing heads (1A, 1B) for periodically scanning said magnetic medium (2) and reproducing said composite digital signal;

means (22) for rotating said rotary heads (1A, 1B) such that during each revolution one only of the two rotary heads (1A, 1B) is reading, said rotary heads (1A, 1B) being switched so as to read successive adjacent tracks on the magnetic medium (2);

reproducing guide means (3) for guiding said record medium (2) past said rotary heads (1A, 1B) over an angular range of not more than 180°;

error correction means (36) for correcting errors contained in said reproduced composite digital signal reproduced by said rotary heads (1A, 1B);

memory means (35) for time-base expanding said corrected digital signal; and

converting means (38) for converting the time-base expanded digital signal into a corresponding analog signal.

16. Apparatus according to claim 15 wherein said digital signal as recorded is a PCM signal and said memory means (35) includes a pair of random access memories for receiving reproduced PCM signals during said reproducing periods.

17. Apparatus according to claim 16 further comprising error concealment circuit means (37) for concealing non-corrected errors in said error-corrected PCM signal.

**Patentansprüche**

1. Vorrichtung zur Aufnahme eines analogen Signals auf einem magnetischen Medium (2), die zwei unterschiedliche Azimutwinkel aufweisende Drehkörpfe (1A, 1B) benutzt, welche periodisch das magnetische Medium (2) verfolgen, mit

einem Umsetzmittel (14) zum Umsetzen des analogen Signals in ein digitales Signal,

einem Mittel (22) zum Drehen der Drehköpfe (1A, 1B),

einem Führungsmittel (3) zum Führen des magnetischen Mediums (2) an den Drehköpfen (1A, 1B) über einen Winkelbereich von nicht mehr als 180° vorbei und

Kompressionsmittel (15, 16) zum zeitbasismäßigen Komprimieren des digitalen Signals, um ein zeitbasismäßig komprimiertes Aufzeichnungssignal zu erzeugen,

gekennzeichnet durch

ein Mittel (13) zum selektiven Zuführen des zeitbasismäßig komprimierten Aufzeichnungssignals zu den Drehköpfen (1A, 1B), so daß während jeder Umdrehung nur einer der Drehköpfe (1A, 1B) aufzeichnet, wobei die Drehköfpe (1A, 1B) geschaltet werden, um aufeinanderfolgend benachbarte Spuren auf dem magnetischen Medium (2) aufzuzeichnen, und das zeitbasismäßig komprimierte Aufzeichnungssignal den Drehköpfen (1A, 1B) in Perioden zugeführt wird, die den Aufzeichnungsperioden der Drehköpfe (1A, 1B) entsprechen.

2. Vorrichtung nach Anspruch 1, bei der die Drehköpfe (1A, 1B) abstandsgleiche Magnetköpfe (1A, 1B) sind, das magnetische Medium (2) ein Magnetband (2) ist und das Führungsmittel (3) ein Mittel (3) zum Führen des Bandes (2) an den zwei Magnetköpfen (1A, 1B) über einen Winkelbereich von 180° vorbei enthält.

3. Vorrichtung nach Anspruch 2, die ein Mittel (3) zur Halterung der zwei Magnetköpfe (1A, 1B) derart enthält, daß diese gegenseitig in der rotationsaxialen Richtung so ausgelenkt werden, daß ein Abtastort eines Magnetkopfs (1A) mit einem Abtastort des anderen Magnetkopfs (1B) während des Führens des Bandes (2) nach den Magnetköpfen (1A, 1B) übereinstimmt.

4. Vorrichtung nach Anspruch 3, bei der das Mittel (13) zum selektiven Zuführen des zeitbasismäßig komprimierten Signals zu den Drehköpfen (1A, 1B) ein Mittel (13) zum Zuführen des Signals zu den zwei abstandsgleichen Magnetköpfen (1A, 1B) während Perioden enthält, in denen die Magnetköpfe (1A, 1B) das Band (2) einmal alle zwei Umdrehungen der Magnetköpfe (1A, 1B) berühren.

5. Vorrichtung nach Anspruch 1, bei der die Drehköpfe (1A, 1B) aus zwei Magnetköpfen (1A, 1B) bestehen, die im wesentlichen in derselben Position angeordnet sind, das magnetische Medium (2) aus einem Magnetband (2) besteht und das Führungsmittel (3) ein Mittel (3) zum Führen des Bandes (2) an den zwei Magnetköpfen (1A, 1B) über einen Winkelbereich von 90° vorbei enthält.

6. Vorrichtung nach Anspruch 1, bei der das Umsetzmittel (14) ein Mittel (14) zum Erzeugen eines pulscodemodulierten (PCM) Signals enthält, das das analoge Signal repräsentiert, und bei der desweiteren ein Digitaldaten-Erzeugungsmittel (17) vorgesehen ist zum Zuführen von Paritätsdaten und eines zyklischen Redundanzprüfcode, die mit dem PCM-Siganl zu kombinieren sind, um ein zusammengesetztes Siganl zu bilden.

7. Vorrichtung nach Anspruch 6, bei der die Kompressionsmittel (15, 16) ein Speichermittel (16) zum Speichern und zum zeitbasismäßigen Komprimieren des digitalen Signals enthält und das Digitaldaten-Erzeugungsmittel (17) zu den PCM-Daten die Paritätsdaten und den zyklischen Redundanzprüfcode addiert und das sich ergebende zusammengesetzte Signal in das Speichermittel (16) einschreibt.

8. Verfahren zur Aufnahme eines analogen Signals auf einem magnetischen Medium (2), das zwei unterschiedliche Azimutwinkel aufweisende Drehköpfe (1A, 1B) benutzt, die das magnetische Medium (2) periodisch verfolgen, mit Schritten zum

Umsetzen des analogen Signals in ein digitales Signal,

Drehen der Drehköpfe (1A, 1B),

Führen des magnetischen Mediums (2) an den Drehköpfen (1A, 1B) über einen Winkelbereich von nicht mehr als 180° vorbei und

zeitbasismäßigen Komprimieren des digitalen Signals, um ein zeitbasismäßig komprimiertes Aufzeichnungssignal zu erzeugen,

gekennzeichnet durch

ein selektives Zuführen des zeitbasismäßig komprimierten Aufzeichnungssignals zu den Drehköpfen (1A, 1B) derart, daß während jeder Umdrehung nur einer der Drehköpfe (1A, 1B) aufzeichnet, wobei die Drehköpfe (1A, 1B) so geschaltet werden, daß sie aufeinanderfolgend benachbarte Spuren auf dem magnetischen Medium (2) aufzeichnen und das zeitbasismäßig komprimierte Aufzeichnungssignal den zwei Drehköpfen (1A, 1B) in Perioden zugeführt wird, die den Aufzeichnungsperioden der Drehköpfe (1A, 1B) entsprechen.

9. Verfahren nach Anspruch 8, das desweiteren Schritte enthält zum Einrichten der Drehköpfe (1A, 1B) als zwei abstandsgleiche Magnetköpfe (1A, 1B), Bereitstellen des magnetischen Mediums (2) als ein Magnetband (2) und Führen des Magnetbandes (2) an den zwei Magnetköpfen (1A, 1B) über einen Winkelbereich von 180° vorbei.

10. Verfahren nach Anspruch 9, mit weiteren Schritten zur Halterung der zwei Magnetköpfe (1A, 1B) derart, daß sie gegenseitig in der rotationsaxialen Richtung so ausgelenkt werden, daß ein Abtaster eines Magnetkopfs (1A) mit einem Abtastort des anderen Magnetkopfs (1B) während des Führens des Magnetbandes (2) an den Magnetköpfen (1A, 1B) vorbei übereinstimmt.

11. Verfahren nach Anspruch 10, bei dem der Schritt zum selektiven Zuführen des zeitbasismäßig komprimierten Aufzeichnungssignals zu den Magnetköpfen (1A, 1B) den Schritt zum Zuführen des Aufzeichnungssignals zu den Magnetköpfen (1A, 1B) während Perioden enthält, in denen die Magnetköpfe (1A, 1B) das Magnetband (2) einmal alle zwei Umdrehungen der Magnetköpfe (1A, 1B) berühren.

12. Verfahren nach Anspruch 9, das Schritte zum enthält

Einrichten der zwei Magnetköpfe (1A, 1B) derart, daß sie sich im wesentlichen in derselben Position befinden,

Bereitstellen des magnetischen Mediums (2) als ein Magnetband (2) und

Führen des Magnetbandes (2) an den zwei Magnetköpfen (1A, 1B) über einen Winkelbereich von 180° vorbei.

13. Verfahren nach Anspruch 8, bei dem der Schritt zum Umsetzen des analogen Signals in ein digitales Signal Schritte enthält zum

Erzeugen eines PCM-Signals, das das analoge Signal repräsentiert,

Erzeugen von Paritätsdaten und eines zyklischen Redundanzprüfcode (CRC-Code) und

Kombinieren der Paritätsdaten und des CRC-Code mit dem PCM-Signal, um daraus ein zusammengesetztes Signal zu bilden.

14. Verfahren nach Anspruch 13, bei dem der Schritt zum zeitbasismäßigen Komprimieren des digitalen Signals Schritte enthält zum

Bereitstellen eines Speichers (16) zum Speichern und Komprimieren des digitalen Signals,

Addieren der Paritätsdaten und des zyklischen Redundanzprüfcode zu den PCM-Daten und

Einschreiben des sich ergebenden zusammengesetzten Signals in den Speicher (16).

15. Vorrichtung zur Wiedergabe eines analogen Signals, das als ein korrespondierendes digitales Signal in zeitbasismäßig komprimierter Form als ein zusammengesetztes digitales Signal, das Paritäts- und Fehlerkorrekturdaten enthält, in entsprechenden Spuren auf einem Aufzeichnungsmedium (2) durch eine Vorrichtung zur Aufnahme nach Anspruch 1 aufgezeichnet worden ist, mit

zwei Wiedergabe-Drehköpfen (1A, 1B) zum periodischen Abtasten des magnetischen Mediums (2) und Wiedergeben des zusammengesetzten digitalen Signals,

einem Mittel (22) zum Drehen der Drehköpfe (1A, 1B) derart, daß während jeder Umdrehung nur einer der zwei Drehköpfe (1A, 1B) ausliest, wobei die Drehköpfe (1A, 1B) so geschaltet werden, daß sie aufeinanderfolgend benachbarte Spuren auf dem magnetischen Medium (2) auslesen,

einem Wiedergabe-Führungsmittel (3) zum Führen des Aufzeichnungsmediums (2) an den Drehköpfen (1A, 1B) über einen Winkelbereich von nicht mehr als 180° vorbei,

ein Fehlerkorrekturmittel (36) zum Korrigieren von Fehlern, die in dem wiedergegebenen zusammengesetzten digitalen Signal enthalten sind, das durch die Drehköpfe (1A, 1B) wiedergegeben ist,

ein Speichermittel (35) zum Dehnen der Zeitbasis des korrigierten digitalen Signals und

ein Umsetzmittel (38) zum zeitbasismäßig gedehnten digitalen Signals in ein korrespondierendes analoges Signal.

16. Vorrichtung nach Anspruch 15, bei der das digitale Signal, wie es aufgezeichnet ist, ein PCM-Signal ist und das Speichermittel (35) ein Paar vom Speichern mit wahlfreiem Zugriff zum Aufnehmen wiedergegebener PCM-Signale während der Wiedergabeperioden enthält.

17. Vorrichtung nach Anspruch 16, die desweiteren eine Fehlerverdeckungsschaltung (37) zum Verdecken von nichtkorrigierten Fehlern in den fehlerkorrigierten PCM-Signal enthält.

## Revendications

1. Appareil pour enregistrer un signal analogique sur un support magnétique (2) en utilisant deux têtes tournantes (1A, 1B) qui ont des angles d'azimut différents et qui balaient périodiquement le support magnétique (2), cet appareil comprenant:

des moyens de conversion (14) pour convertir le signal analogique en un signal numérique;

des moyens (22) pour faire tourner les têtes tournantes (1A, 1B);

des moyens de guidage (3) pour guider le support magnétique (2) de façon à le faire passer devant les têtes tournantes (1A, 1B), sur une plage angulaire ne dépassant pas 180°; et

des moyens de compression (15, 16) pour comprimer la base de temps du signal numérique, afin de produire un signal d'enregistrement à base de temps comprimée;

caractérisé par:

des moyens (13) pour appliquer sélectivement aux têtes tournantes (1A, 1B) le signal d'enregistrement à base de temps comprimée, de façon que pendant chaque révolution une seule des têtes tournantes (1A, 1B) fonctionne en écriture, ces têtes tournantes (1A, 1B) étant commutées de façon à écrire des pistes adjacentes successives sur le support magnétique (2), et le signal d'enregistrement à base de temps comprimés étant appliqué aux têtes tournantes (1A, 1B) pendant des périodes qui correspondent aux périodes d'écriture des têtes tournantes (1A, 1B).

2. Appareil selon la revendication 1, dans lequel les têtes tournantes (1A, 1B) sont des têtes magnétiques (1A, 1B) espacées de façon égale, le support magnétique (2) est une bande magnétique (2), et les moyens de guidage (3) comprennent des moyens (3) pour guider la bande (2) de façon à la faire passer devant les deux têtes magnétiques (1A, 1B) sur une plage angulaire de 180°.

3. Appareil selon la revendication 2, comprenant des moyens (3) pour monter les deux têtes magnétiques (1A, 1B) de façon qu'elles soient mutuellement décalées dans la direction de l'axe de rotation, afin qu'un chemin de balayage d'une tête magnétique (1A) coïncide avec un chemin de balayage de l'autre tête magnétique (1B), pendant le guidage de la bande (2) devant les têtes magnétiques (1A, 1B).

4. Appareil selon la revendication 3, dans lequel les moyens (13) destinés à appliquer sélectivement aux têtes tournantes (1A, 1B) le signal à base de temps comprimée, comprennent des moyens (13) destinés à appliquer ce signal aux deux têtes magnétiques espacées de façon égale (1A, 1B) pendant des périodes au cours desquelles ces têtes magnétiques (1A, 1B) sont en contact avec la bande (2), pendant l'une sur deux des révolutions des têtes magnétiques (1A, 1B).

5. Appareil selon la revendication 1, dans lequel les têtes tournantes (1A, 1B) consistent en deux têtes magnétiques (1A, 1B) disposées pratiquement à la même position, le support magnétique (2) consiste en une bande magnétique (2) et les moyens de guidage (3) comprennent des moyens (3) pour guider la bande (2) devant les deux têtes magnétiques (1A, 1B), sur une plage angulaire de 90°.

6. Appareil selon la revendication 1, dans lequel les moyens de conversion (14) comprennent des moyens (14) destinés à produire un signal en modulation par impulsions et codage (MIC) représentant le signal analogique; et dans lequel il existe en outre des moyens de génération de données numériques (17) qui sont destinés à fournir des données de parité et un code de contrôle par redondance cyclique, à combiner avec le signal MIC, pour former un signal composite.

7. Appareil selon la revendication 6, dans lequel les moyens de compression (15, 16) comprennent des moyens de mémoire (16) destinés à enregistrer le signal numérique et à comprimer sa base de temps, et les moyens de génération de données numériques (17) ajoutent les données de parité et le code de contrôle par redondance cyclique au signal MIC, et ils écrivent le signal composite résultant dans les moyens de mémoire (16).

8. Un procédé d'enregistrement d'un signal analogique sur un support magnétique (2) utilisant deux têtes tournantes (1A, 1B) qui ont des angles d'azimut différents et qui balaient périodiquement le support magnétique (2), ce procédé comprenant les opérations suivantes:

on convertit le signal analogique en un signal numérique;

on fait tourner les têtes tournantes (1A, 1B);

on guide le support magnétique (2) de façon à le faire passer devant les têtes tournantes (1A, 1B) sur une plage angulaire ne dépassant pas 180°; et

on comprime la base de temps du signal numérique pour produire un signal d'enregistrement à base de temps comprimée;

caractérisé en ce que:

on applique sélectivement aux têtes tournantes (1A, 1B) le signal d'enregistrement à base de temps comprimée, de façon que pendant chaque révolution, une seule des têtes tournantes (1A, 1B) fonctionne en écriture, ces têtes tournantes (1A, 1B) étant commutées de façon à écrire des pistes adjacentes successives sur le support d'enregistrement (2), et le signal d'enregistrement à base de temps comprimée étant appliqué aux têtes tournantes (1A, 1B) pendant des périodes qui correspondant aux périodes d'écriture des têtes tournantes (1A, 1B).

9. Un procédé selon la revendication 8, comprenant en outre les opérations qui consistent à réaliser les têtes tournantes (1A, 1B) sous la forme de deux têtes magnétiques (1A, 1B) espacées de façon égale, à réaliser le support magnétique (2) sous la forme d'une bande magnétique (2), et à guider la bande magnétique (2) devant les deux têtes magnétiques (1A, 1B) sur une plage angulaire de 180°.

10. Un procédé selon la revendication 9, comprenant les opérations supplémentaires qui consistent à monter les deux têtes magnétiques (1A, 1B) dans des positions mutuellement décalées dans la direction de l'axe de rotation, de façon qu'un chemin de balayage d'une tête magnétique (1A) coïncide avec un chemin de balayage de l'autre tête magnétique (1B), pendant le guidage de la bande magnétique (2) devant les têtes magnétiques (1A, 1B).

11. Un procédé selon la revendication 10, dans lequel l'opération consistant à appliquer sélectivement aux têtes magnétiques (1A, 1B) le signal d'enregistrement à base de temps comprimée, comprend l'opération qui consiste à appliquer le signal d'enregistrement aux têtes magnétiques (1A, 1B) pendant des périodes au cours desquelles les têtes magnétiques (1A, 1B) sont en contact avec la bande magnétique (2), pendant l'une sur deux des révolutions des têtes magnétiques (1A, 1B).

12. Un procédé selon la revendication 9, comprenant les opérations qui consistent à disposer les deux têtes magnétiques (1A, 1B) de façon qu'elles soient pratiquement à la même position, à réaliser le support magnétique (2) sous la forme d'une bande magnétique (2), et à guider la bande magnétique (2) devant les deux têtes magnétiques (1A, 1B) sur une plage angulaire de 180°.

13. Un procédé selon la revendication 8, dans lequel l'opération de conversion du signal analogique en un signal numérique comprend les opérations qui consistent à produire un signal MIC représentant le signal analogique, et à produire des données de parité et un code de contrôle par redondance cyclique (CRC), et à combiner les données de parité et le code CRC avec le signal MIC, pour former un signal composite à partir d'eux.

14. Un procédé selon la revendication 13, dans lequel l'opération de compression de la base de temps du signal numérique comprend les opérations qui consistent à établir une mémoire (16) pour enregistrer et comprimer le signal numérique, à ajouter les données de parité et le code de contrôle par redondance cyclique au signal MIC, et à écrire le signal composite résultant dans la mémoire (16).

15. Appareil pour reproduire un signal analogique qui a été enregistré sous la forme d'un signal numérique correspondant, avec une base de temps comprimée, dans un signal numérique composite comprenant des données de parité et de correction d'erreur, dans des pistes correspondantes sur un support d'enregistrement (2), par un appareil d'enregistrement conforme à la revendication 1, cet appareil de reproduction comprenant:

deux têtes de reproduction tournantes (1A, 1B) destinées à balayer périodiquement le support magnétique (2) et à reproduire le signal numérique composite;

des moyens (22) pour faire tourner les têtes tournantes (1A, 1B), de façon que pendant chaque révolution, une seule des deux têtes tournantes (1A, 1B) fonctionne en lecture, ces têtes tournantes (1A, 1B) étant commutées de façon à lire des pistes adjacentes successives sur le support magnétique (2);

des moyens de guidage de reproduction (3) destinés à guider le support d'enregistrement (2) de façon à le faire passer devant les têtes tournantes (1A, 1B), sur une plage angulaire ne dépassant pas 180°;

des moyens de correction d'erreur (36) destinés à corriger des erreurs qui sont contenues dans le signal numérique composite qui est reproduit par les têtes tournantes (1A, 1B);

des moyens de mémoire (35) destinés à effectuer une extension de base de temps du signal numérique corrigé; et

des moyens de conversion (38) pour convertir le signal numérique à base de temps étendue, pour donner un signal analogique correspondant.

16. Appareil selon la revendication 15, dans lequel le signal numérique qui est enregistré est un signal MIC, et les moyens de mémoire (35) comprennent une paire de mémoires vives qui sont destinées à recevoir des signaux MIC reproduits, pendant les périodes de reproduction.

17. Appareil selon la revendication 16, comprenant en outre un circuit de masquage d'erreur (37) destiné à masquer des erreurs non corrigées dans le signal MIC qui a subi l'opération de correction d'erreur.

*F I G. 1*

180°

2

5T

1B

1A

3

5H

*F I G. 2*

6C

5H

2

5T          4A 4B 4A 4B 4A 4B 4A 4B

*F I G. 3*

CP

CRC
CODE
ADDER          17

RSW

SL          12
ANALOG-
DIGITAL
CONVERTOR          SO
11L                          RECORDING
ENCODER                                    1B          2
SR          14          15                                    18
11R                                                        1A

                                                            PG
BUFFER
RAM          RAM          RAM                              24          21
16C          16B          16A          23

CONTROL
SIGNAL
GENERATOR          RSW
                   CP          CT          SERVO
                              SW                    CIRCUIT          M
13                          20                              22

FIG. 4

FIG. 5A-I    So
FIG. 5B-I    RAM 16C
FIG. 5C-I    RAM 16B
FIG. 5D-I    RAM 16A
FIG. 5E-I    RSW
FIG. 5F-I    CT
FIG. 5G-I    SH
FIG. 5H-I    OUTPUT REPRODUCED BY HEAD 1B
FIG. 5I-I    OUTPUT REPRODUCED BY HEAD 1A
FIG. 5J-I    RAM 35B
FIG. 5K-I    RAM 35C
FIG. 5L-I    RAM 35A
FIG. 5M-I    RSWp
FIG. 5N-I    WC

FIG. 5-I
FIG. 5-II

EP 0 115 699 B1

FIG. 5A-II — S4 | S5 | S6 | S7

FIG. 5B-II — S5 | S7

FIG. 5C-II — S3′ | ADD PARITY | READ | S5′ | ADD PARITY | READ | S7′

FIG. 5D-II — S4 | ADD PARITY | READ | S6 | ADD PARITY | READ

FIG. 5E-II — TB | TR | TA | TB | TR | TA

FIG. 5F-II

FIG. 5G-II — P | HB | HA | P | HB | HA | P | HB | HA | P | HB | HA

FIG. 5H-II — S3″ | S5″

FIG. 5I-II — S4″ | S6″

FIG. 5J-II — READ (S1) | WRITE | CORRECT | READ (S3) | WRITE | CORRECT

FIG. 5K-II — DELAY | DELAY

FIG. 5L-II — WRITE | CORRECT | READ (S2) | WRITE | CORRECT | READ (S4)

FIG. 5M-II

FIG. 5N-II — TWA | TWB | TWA | TWB

4

## FIG. 6

## FIG. 8

## FIG. 7

EP 0 115 699 B1